# FASCICULE DE BREVET EUROPEEN

(11) **EP 4 437 161 B1**
(45) Date de publication et mention de la délivrance du brevet: **18.02.2026**
(21) Numéro de dépôt: 22826137.6
(22) Date de dépôt: 21.11.2022
(51) Int. Cl.: C25B 1/042, C25B 9/60, C25B 9/75, C25B 9/77, C25B 9/70, H01M 8/2432, H01M 8/247, H01M 8/248, H01M 8/249, H01M 8/12

(54) **SYSTÈME DE CONDITIONNEMENT D'UNE PLURALITÉ D'EMPILEMENTS DE CELLULES À OXYDES SOLIDES DE TYPE SOEC/SOFC À HAUTE TEMPÉRATURE**
KONDITIONNIERUNGSSYSTEM VON FESTOXID ZELLENSTAPELN VOM TYP SOEC/SOFC BEI HOHER TEMPERATUR
CONDITIONING SYSTEM FOR A PLURALITY OF SOLIDE OXIDE CELL STACKS OF TYPE SOEC/SOFC AT HIGH TEMPERATURE

(30) Priorité: 23.11.2021 FR 2112366
(43) Date de publication de la demande: 02.10.2024
(73) Titulaire: Commissariat à l'Energie Atomique et aux Energies Alternatives, 75015 Paris (FR)
(72) Inventeur: DI IORIO, Stéphane, 38054 GRENOBLE CEDEX 09 (FR); GILLIA, Olivier, 38054 GRENOBLE cedex 09 (FR); MONNET, Thibault, 38054 GRENOBLE CEDEX 09 (FR); VULLIEZ, Karl, 38054 GRENOBLE CEDEX 09 (FR)
(74) Mandataire: Santarelli
(86) Numéro de dépôt international: PCT/FR2022/052137
(87) Numéro de publication internationale: WO 2023/094756

(56) Documents cités:
- EP-A1- 1 705 741
- EP-A1- 3 322 021
- WO-A1-2008/089977
- WO-A2-2004/077587

## Description

### DOMAINE TECHNIQUE

La présente invention se rapporte au domaine général de l'électrolyse à haute température (EHT), en particulier l'électrolyse de la vapeur d'eau à haute température (EVHT), respectivement désignées par les appellations anglaises « High Temperature Electrolysis » (HTE) et « High Temperature Steam Electrolysis » (HTSE), de l'électrolyse du dioxyde de carbone (CO₂), voire encore de la co-électrolyse de la vapeur d'eau et du dioxyde de carbone (CO₂) à haute température.

Plus précisément, l'invention se rapporte au domaine des électrolyseurs à oxydes solides à haute température, désignés habituellement par l'acronyme SOEC (pour « Solide Oxide Electrolysis Cell » en anglais).

Elle concerne également le domaine des piles à combustible à oxydes solides à haute température, désignées habituellement par l'acronyme SOFC (pour « Solid Oxide Fuel Cells » en anglais).

Ainsi, de façon plus générale, l'invention se réfère au domaine des empilements de cellules à oxydes solides de type SOEC/SOFC fonctionnant à haute température.

Plus précisément, l'invention concerne un système de conditionnement d'une pluralité d'empilements de cellules à oxydes solides de type SOEC/SOFC fonctionnant à haute température, permettant le conditionnement simultané des empilements.

### ÉTAT DE LA TECHNIQUE ANTÉRIEURE

Dans le cadre d'un électrolyseur à oxydes solides à haute température de type SOEC, il s'agit de transformer par le biais d'un courant électrique, au sein d'un même dispositif électrochimique, la vapeur d'eau (H₂O) en dihydrogène (H₂) ou d'autres combustibles tels que le méthane (CH₄), le gaz naturel, le biogaz, et en dioxygène (O₂), et/ou encore de transformer le dioxyde de carbone (CO₂) en monoxyde de carbone (CO) et en dioxygène (O₂). Dans le cadre d'une pile à combustible à oxydes solides à haute température de type SOFC, le fonctionnement est inverse pour produire un courant électrique et de la chaleur en étant alimentée en dihydrogène (H₂) et en dioxygène (O₂), typiquement en air et en gaz naturel, à savoir par du méthane (CH₄). Par souci de simplicité, la description suivante privilégie le fonctionnement d'un électrolyseur à oxydes solides à haute température de type SOEC réalisant l'électrolyse de la vapeur d'eau. Toutefois, ce fonctionnement est applicable à l'électrolyse du dioxyde de carbone (CO₂), voire encore de la co-électrolyse de la vapeur d'eau à haute température (EHT) avec le dioxyde de carbone (CO₂). De plus, ce fonctionnement est transposable au cas d'une pile à combustible à oxydes solides à haute température de type SOFC.

Pour réaliser l'électrolyse de l'eau, il est avantageux de la réaliser à haute température, typiquement entre 600 et 1000°C, parce qu'il est plus avantageux d'électrolyser de la vapeur d'eau que de l'eau liquide et parce qu'une partie de l'énergie nécessaire à la réaction peut être apportée par de la chaleur, moins chère que l'électricité.

Pour mettre en œuvre l'électrolyse de la vapeur d'eau à haute température (EVHT), un électrolyseur à oxydes solides à haute température de type SOEC est constitué d'un empilement de motifs élémentaires comportant chacun une cellule d'électrolyse à oxyde solide, ou encore cellule électrochimique, constituée de trois couches anode/électrolyte/cathode superposées l'une sur l'autre, et de plaques d'interconnexion en alliages métalliques, aussi appelées plaques bipolaires ou interconnecteurs. Chaque cellule électrochimique est enserrée entre deux plaques d'interconnexion. Un électrolyseur à oxydes solides à haute température de type SOEC est alors un empilement alterné de cellules électrochimiques et d'interconnecteurs. Une pile à combustible à oxydes solides à haute température de type SOFC est constituée du même type d'empilement de motifs élémentaires. Cette technologie à haute température étant réversible, le même empilement peut fonctionner en mode électrolyse et produire de l'hydrogène et de l'oxygène à partir d'eau et d'électricité, ou en mode pile à combustible et produire de l'électricité à partir d'hydrogène et d'oxygène.

Chaque cellule électrochimique correspond à un assemblage électrolyte/électrodes, qui est typiquement un assemblage multicouche en céramique dont l'électrolyte est formé par une couche centrale conductrice d'ions, cette couche étant solide, dense et étanche, et enserrée entre les deux couches poreuses formant les électrodes. Il est à noter que des couches supplémentaires peuvent exister, mais qui ne servent qu'à améliorer l'une ou plusieurs des couches déjà décrites.

Les dispositifs d'interconnexion, électrique et fluidique, sont des conducteurs électroniques qui assurent, d'un point de vue électrique, la connexion de chaque cellule électrochimique de motif élémentaire dans l'empilement de motifs élémentaires, garantissant le contact électrique entre une face et la cathode d'une cellule et entre l'autre face et l'anode de la cellule suivante, et d'un point de vue fluidique, l'apport en réactifs et l'évacuation des produits pour chacune des cellules. Les interconnecteurs assurent ainsi les fonctions d'amenée et de collecte de courant électrique et délimitent des compartiments de circulation des gaz, pour la distribution et/ou la collecte.

Plus précisément, les interconnecteurs ont pour fonction principale d'assurer le passage du courant électrique mais aussi la circulation des gaz au voisinage de chaque cellule (à savoir : vapeur d'eau injectée, hydrogène et oxygène extraits pour l'électrolyse EHT ; air et combustible dont l'hydrogène injecté et vapeur d'eau extraite pour une pile SOFC), et de séparer les compartiments anodiques et cathodiques de deux cellules adjacentes, qui sont les compartiments de circulation des gaz du côté respectivement des anodes et des cathodes des cellules.

En particulier, pour un électrolyseur à oxydes solides à haute température de type SOEC, le compartiment cathodique comporte la vapeur d'eau et l'hydrogène, produit de la réaction électrochimique, tandis que le compartiment anodique comporte un gaz drainant, si présent, et de l'oxygène, autre produit de la réaction électrochimique. Pour une pile à combustible à oxydes solides à haute température de type SOFC, le compartiment anodique comporte le combustible, tandis que le compartiment cathodique comporte le comburant.

Pour réaliser l'électrolyse de la vapeur d'eau à haute température (EHT), on injecte de la vapeur d'eau (H₂O) dans le compartiment cathodique. Sous l'effet du courant électrique appliqué à la cellule, la dissociation des molécules d'eau sous forme de vapeur est réalisée à l'interface entre l'électrode à hydrogène (cathode) et l'électrolyte : cette dissociation produit du gaz dihydrogène (H₂) et des ions oxygène (O²⁻). Le dihydrogène (H₂) est collecté et évacué en sortie de compartiment à hydrogène. Les ions oxygène (O²⁻) migrent à travers l'électrolyte et se recombinent en dioxygène (O₂) à l'interface entre l'électrolyte et l'électrode à oxygène (anode). Un gaz drainant, tel que de l'air, peut circuler au niveau de l'anode et ainsi collecter l'oxygène généré sous forme gazeuse à l'anode.

Pour assurer le fonctionnement d'une pile à combustible à oxydes solides (SOFC), on injecte de l'air (oxygène) dans le compartiment cathodique de la pile et de l'hydrogène dans le compartiment anodique. L'oxygène de l'air va se dissocier en ions O²⁻. Ces ions vont migrer dans l'électrolyte de la cathode vers l'anode pour oxyder l'hydrogène et former de l'eau avec une production simultanée d'électricité. En pile SOFC, tout comme en électrolyse SOEC, la vapeur d'eau se trouve dans le compartiment de dihydrogène (H₂). Seule la polarité est inversée.

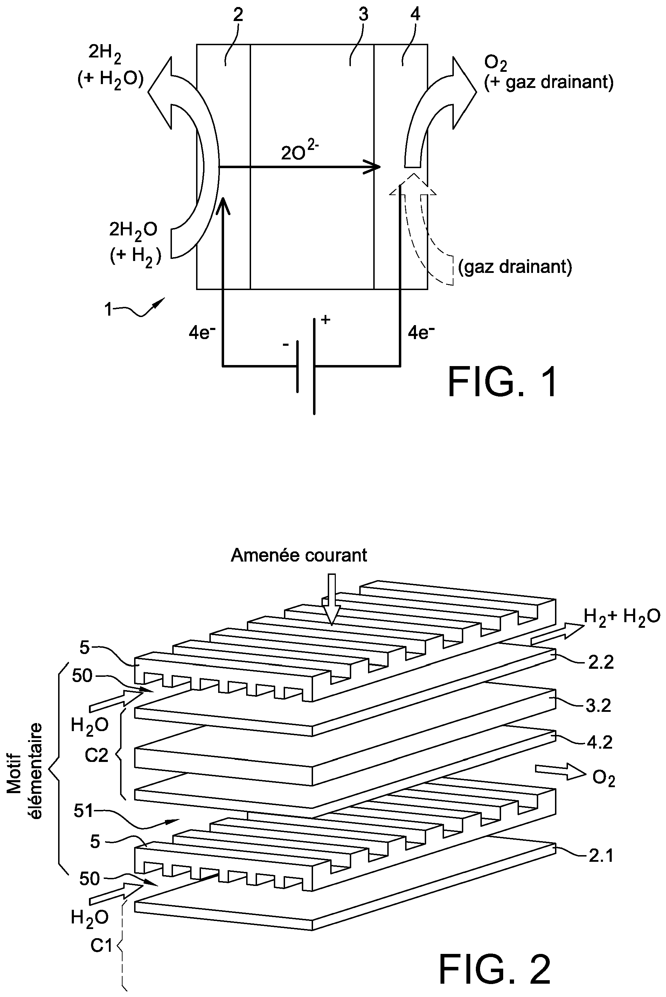

A titre d'illustration, la figure 1 représente une vue schématique montrant le principe de fonctionnement d'un électrolyseur à oxydes solides à haute température de type SOEC. La fonction d'un tel électrolyseur est de transformer la vapeur d'eau en hydrogène et en oxygène selon la réaction électrochimique suivante :

2 H₂O → 2 H₂ + O₂.

Cette réaction est réalisée par voie électrochimique dans les cellules de l'électrolyseur. Comme schématisée sur la figure 1, chaque cellule d'électrolyse élémentaire 1 est formée d'une cathode 2 et d'une anode 4, placées de part et d'autre d'un électrolyte solide 3. Les deux électrodes (cathode et anode) 2 et 4 sont des conducteurs électroniques et/ou ioniques, en matériau poreux, et l'électrolyte 3 est étanche au gaz, isolant électronique et conducteur ionique. L'électrolyte 3 peut être en particulier un conducteur anionique, plus précisément un conducteur anionique des ions O²⁻ et l'électrolyseur est alors dénommé électrolyseur anionique, par opposition aux électrolytes protoniques (H⁺).

Les réactions électrochimiques se font à l'interface entre chacun des conducteurs électroniques et le conducteur ionique.

A la cathode 2, la demi-réaction est la suivante :

2 H₂O + 4 e⁻ → 2 H₂ + 2 O²⁻.

A l'anode 4, la demi-réaction est la suivante:

2 O²⁻ → O₂ + 4 e⁻.

L'électrolyte 3, intercalé entre les deux électrodes 2 et 4, est le lieu de migration des ions O²⁻ sous l'effet du champ électrique créé par la différence de potentiel imposée entre l'anode 4 et la cathode 2.

Comme illustré entre parenthèses sur la figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air, peut en outre être injecté en entrée côté anode pour évacuer l'oxygène produit. L'injection d'un gaz drainant a pour fonction supplémentaire de jouer le rôle de régulateur thermique.

Un électrolyseur, ou réacteur d'électrolyse, élémentaire est constitué d'une cellule élémentaire telle que décrite ci-dessus, avec une cathode 2, un électrolyte 3, et une anode 4, et de deux interconnecteurs qui assurent les fonctions de distribution électrique et fluidique.

Pour augmenter les débits d'hydrogène et d'oxygène produits, il est connu d'empiler plusieurs cellules d'électrolyse élémentaires les unes sur les autres en les séparant par des interconnecteurs. L'ensemble est positionné entre deux plaques d'interconnexion d'extrémité qui supportent les alimentations électriques et les alimentations en gaz de l'électrolyseur (réacteur d'électrolyse).

Un électrolyseur à oxydes solides à haute température de type SOEC comprend ainsi au moins une, généralement une pluralité de cellules d'électrolyse empilées les unes sur les autres, chaque cellule élémentaire étant formée d'un électrolyte, d'une cathode et d'une anode, l'électrolyte étant intercalé entre l'anode et la cathode.

Comme indiqué précédemment, les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, le compartiment dit cathodique a pour fonction la distribution du courant électrique et de la vapeur d'eau ainsi que la récupération de l'hydrogène à la cathode en contact.

Le compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur à oxydes solides à haute température de type SOEC selon l'art antérieur. Cet électrolyseur comporte une pluralité de cellules d'électrolyse élémentaires C1, C2, de type cellules à oxydes solides (SOEC), empilées alternativement avec des interconnecteurs 5. Chaque cellule C1, C2 est constituée d'une cathode 2.1, 2.2 et d'une anode (seule l'anode 4.2 de la cellule C2 est représentée), entre lesquelles est disposé un électrolyte (seul l'électrolyte 3.2 de la cellule C2 est représenté).

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. La collecte de l'hydrogène produit et de la vapeur d'eau résiduelle à la cathode 2.1, 2.2 est effectuée dans le compartiment cathodique 50 en aval de la cellule C1, C2 après dissociation de la vapeur d'eau par celle-ci. La collecte de l'oxygène produit à l'anode 4.2 est effectuée dans le compartiment anodique 51 en aval de la cellule C1, C2 après dissociation de la vapeur d'eau par celle-ci. L'interconnecteur 5 assure le passage du courant entre les cellules C1 et C2 par contact direct avec les électrodes adjacentes, c'est-à-dire entre l'anode 4.2 et la cathode 2.1.

Les conditions de fonctionnement d'un électrolyseur à oxydes solides à haute température (SOEC) étant très proches de celles d'une pile à combustible à oxydes solides (SOFC), les mêmes contraintes technologiques se retrouvent.

Ainsi, le bon fonctionnement de tels empilements de cellules à oxydes solides de type SOEC/SOFC fonctionnant à haute température requiert principalement de satisfaire aux points énoncés ci-après.

Tout d'abord, il est nécessaire d'avoir une isolation électrique entre deux interconnecteurs successifs sous peine de court-circuiter la cellule électrochimique, mais aussi un bon contact électrique et une surface de contact suffisante entre une cellule et un interconnecteur. La plus faible résistance ohmique possible est recherchée entre cellules et interconnecteurs.

Par ailleurs, il faut disposer d'une étanchéité entre les compartiments anodiques et cathodiques sous peine d'avoir une recombinaison des gaz produits entraînant une baisse de rendement et surtout l'apparition de points chauds endommageant l'empilement.

Enfin, il est indispensable d'avoir une bonne distribution des gaz à la fois en entrée et en récupération des produits sous peine de perte de rendement, d'inhomogénéité de pression et de température au sein des différents motifs élémentaires, voire de dégradations rédhibitoires des cellules électrochimiques.

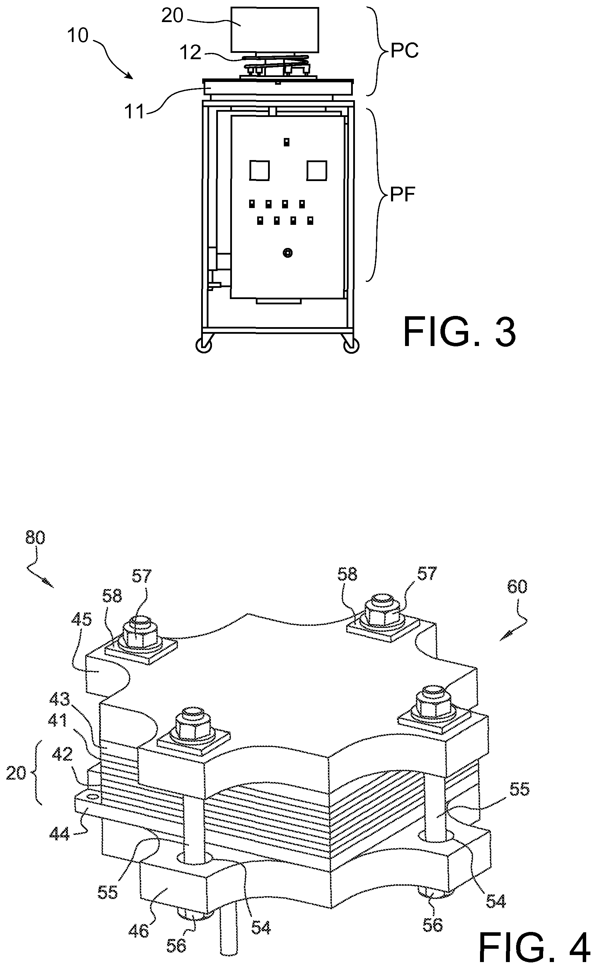

Les gaz entrants et sortants dans un empilement d'électrolyse à haute température (SOEC) ou de pile à combustible (SOFC) fonctionnant à haute température peuvent être gérés par le biais de dispositifs tel que celui illustré en référence à la figure 3. Le dispositif 10 comporte ainsi des parties froides PF et des parties chaudes PC, ces dernières comprenant la sole de four 11, un tube en boucle 12 pour gérer les entrées et sorties de gaz et l'empilement 20, encore appelé « stack », d'électrolyse à haute température (SOEC) ou de pile à combustible (SOFC).

Par ailleurs, la figure 4 permet d'illustrer un exemple d'ensemble 80 comprenant un tel empilement 20 ou stack et un système de serrage 60 de celui-ci. Un tel ensemble 80 peut être tel que décrit dans la demande de brevet français FR 3 045 215 A1.

Ainsi, l'empilement 20 comporte une pluralité de cellules électrochimiques 41 formées chacune d'une cathode, d'une anode et d'un électrolyte intercalé entre la cathode et l'anode, et une pluralité d'interconnecteurs intermédiaires 42 agencés chacun entre deux cellules électrochimiques 41 adjacentes. De plus, il comporte une plaque terminale supérieure 43 et une plaque terminale inférieure 44, respectivement également dénommées plaque terminale de stack supérieure 43 et plaque terminale de stack inférieure 44, entre lesquelles la pluralité de cellules électrochimiques 41 et la pluralité d'interconnecteurs intermédiaires 42 sont enserrées, soit entre lesquelles se trouve le stack.

Le système de serrage 60 comporte une plaque de serrage supérieure 45 et une plaque de serrage inférieure 46, entre lesquelles l'empilement 20 est enserré. Chaque plaque de serrage 45, 46 comporte quatre orifices de serrage 54 au travers desquels s'étendent des tiges de serrage 55, ou tirants. Aux extrémités de celles-ci sont prévus des moyens de serrage 56, 57, 58.

En général, à ce jour, les empilements 20 ont un nombre limité de cellules électrochimiques 41.

Avant son fonctionnement, il est nécessaire de faire subir à l'empilement 20 au moins une étape de traitement thermique dite de réduction, afin de mettre les cellules électrochimiques 41 sous leur forme réduite, et non pas oxydées comme elles le sont initialement. Cette étape de réduction peut être un cycle thermomécanique sous gaz réducteur pour l'électrode à hydrogène et air ou gaz neutre pour l'électrode à oxygène. Une telle étape de traitement thermique a par exemple été décrite dans la demande de brevet européen EP 2 870 650 A1.

Par ailleurs, les empilements 20 mis en œuvre à ce jour utilisent en général, à chacun de leurs étages, des joints qui doivent garantir l'étanchéité entre deux compartiments de circulation des gaz, adjacents et distincts, i.e. un compartiment anodique et un compartiment cathodique. De tels joints ont été décrits dans la demande de brevet européen EP 3 078 071 A1. Ces joints ont la particularité de nécessiter un conditionnement thermique pendant lesquels ils s'écrasent, se mettent en place et changent de microstructure.

De plus, les éléments de contacts, tels que les couches décrites dans la demande de brevet EP 2 900 846 A1 ou les grilles de Nickel, s'écrasent également lors du conditionnement thermique et lors du fonctionnement de l'empilement 20, ce qui garantit leur bonne mise en place. Les éléments qui servent d'éléments de contact dans la chambre hydrogène s'écrasent également.

Autrement dit, pendant l'étape de conditionnement thermique, un empilement 20 s'écrase de plusieurs centimètres. A ce jour, compte-tenu du relativement faible nombre de cellules empilées, l'écrasement se déroule correctement.

Toutefois, la Demanderesse a envisagé des réalisations d'empilements à plus grand nombre de cellules électrochimiques. Dans ce cas, le déplacement attendu lors du serrage de l'empilement peut conduire à des problèmes mécaniques de blocage de type arc-boutement sur les tiges de guidage. Ces blocages empêchent un bon transfert des efforts de serrage et donc alors un bon conditionnement thermique, et par voie de conséquence un fonctionnement normal de l'empilement.

Les documents EP 3 322 021 A1, WO 2008/089977 A1, EP 1 705 741 A1, WO 2004/077587 A2 divulguent des exemples de structures de serrage pour un seul empilement de piles à combustible à oxyde solide plan, comprenant des plaques d'extrémités reliées entre elles par le biais de plusieurs tiges de serrage avec des ressorts entre lesquelles se trouve ledit empilement.

Une solution à ces inconvénients est de prévoir un concept d'empilement ou stack dans lequel plusieurs sous-empilements sont assemblés, par le biais de plaques de rigidification, de sorte à gérer les grands écrasements. Cependant, il faut alors conditionner chaque sous-empilement séparément et ainsi un nombre important d'empilements et de sous-empilements doit être réalisé.

Or, le conditionnement d'un tel empilement est une étape longue et coûteuse car le chauffage demande de l'énergie. De plus, les dispositifs actuels permettent de conditionner un seul empilement ou sous-empilement à la fois.

En conséquence, il existe encore un besoin pour améliorer le principe de conditionnement des empilements d'électrolyse à haute température (SOEC) ou de pile à combustible (SOFC), notamment pour conditionner plusieurs empilements en même temps.

### EXPOSÉ DE L'INVENTION

L'invention a pour but de remédier au moins partiellement aux besoins mentionnés précédemment et aux inconvénients relatifs aux réalisations de l'art antérieur.

Elle vise notamment la réalisation d'une conception de conditionnement multiple pour empilement d'électrolyse à haute température (SOEC) ou de pile à combustible (SOFC) tout en maintenant un serrage contrôlé malgré la grande course d'écrasement des empilements.

L'invention a ainsi pour objet, selon l'un de ses aspects, un système de conditionnement d'une pluralité d'empilements de cellules à oxydes solides de type SOEC/SOFC fonctionnant à haute température, chaque empilement comportant une pluralité de cellules électrochimiques formées chacune d'une cathode, d'une anode et d'un électrolyte intercalé entre la cathode et l'anode, et une pluralité d'interconnecteurs intermédiaires agencés chacun entre deux cellules électrochimiques adjacentes,
caractérisé en ce que le système comporte :
- une enceinte thermique délimitant un volume interne,
- une pluralité d'empilements placés dans le volume interne,
- un bâti, positionné de part et d'autre de l'enceinte thermique,
- un premier dispositif de traverse, monté sur le bâti de façon mobile par rapport à celui-ci, en superposition de l'enceinte thermique,
- une pluralité de cannes de serrage, chaque empilement étant associé à une ou plusieurs cannes de serrage, les cannes de serrage étant montées au travers du premier dispositif de traverse et destinées à venir au contact des empilements pour en permettre le serrage,
- une pluralité d'organes de rappel élastique, chaque empilement étant associé à un ou plusieurs organes de rappel élastique, chaque organe de rappel élastique étant monté autour d'une canne de serrage et fixé, par une première extrémité, à la canne de serrage par le biais d'un élément de fixation ainsi que, par une deuxième extrémité, au premier dispositif de traverse par le biais d'un élément de guidage et de maintien, de sorte que la canne de serrage soit soutenue par l'organe de rappel élastique apte à être comprimé sous l'effet du poids de la canne de serrage.

Le système de conditionnement selon l'invention peut en outre comporter l'une ou plusieurs des caractéristiques suivantes prises isolément ou suivant toutes combinaisons techniques possibles.

Le nombre d'empilements peut être compris entre 2 et 100. Préférentiellement, le nombre d'empilements peut être égal à 4, notamment disposés en deux rangés de deux, de sorte à permettre un bon équilibrage du premier dispositif de traverse pouvant prendre la forme d'une croix.

De plus, le système de conditionnement selon l'invention peut comporter une sole, placée dans le volume interne de l'enceinte thermique et sur laquelle est placée la pluralité d'empilements.

Chaque empilement peut être associé à un nombre d'organes de rappel élastique compris entre 1 et 10, chaque empilement étant notamment associé à un seul et unique organe de rappel élastique et une seule et unique canne de serrage. A noter qu'il est également possible d'avoir plusieurs cannes de serrage sur chaque empilement. L'avantage serait de diminuer l'effort apporté par chaque canne et par chaque organe de rappel élastique. L'alignement du serrage est alors facilité.

Préférentiellement, les empilements peuvent être positionnés sur un même plan. Autrement dit encore, les empilements peuvent être placés les uns à côté des autres, et avantageusement être non superposés les uns au dessus des autres.

En outre, la rigidité de chaque organe de rappel élastique peut être comprise entre 0,1 N/mm et 1000 N/mm, notamment entre 1 N/mm et 20 N/mm.

La longueur de chaque organe de rappel élastique peut être comprise entre 0,1 m et 10 m, notamment entre 1 m et 2 m.

Le nombre de cellules électrochimiques peut préférentiellement être supérieur ou égal à 25. Toutefois, l'invention s'applique également à un nombre de cellules électrochimiques inférieur à 25.

Par ailleurs, le système de conditionnement selon l'invention peut comporter au moins un support des empilement, notamment un support par empilement, solidarisé au bâti, notamment formé au travers d'une sole sur laquelle est placée la pluralité d'empilements.

En outre, l'invention a également pour objet, selon un autre de ses aspects, un procédé de serrage d'une pluralité d'empilements de cellules à oxydes solides de type SOEC/SOFC fonctionnant à haute température par le biais d'un système de conditionnement tel que défini précédemment, caractérisé en ce qu'il comporte l'étape consistant à déplacer le premier dispositif de traverse par rapport au bâti en direction de la pluralité d'empilements.

Le procédé peut avantageusement être mis en œuvre sous gaz inerte.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
[Fig. 1] est une vue schématique montrant le principe de fonctionnement d'un électrolyseur à oxydes solides à haute température (SOEC),
[Fig. 2] est une vue schématique éclatée d'une partie d'un électrolyseur à oxydes solides à haute température (SOEC) comprenant des interconnecteurs selon l'art antérieur,
[Fig. 3] illustre le principe de l'architecture d'un four sur lequel un empilement d'électrolyse à haute température (SOEC) ou de pile à combustible (SOFC) fonctionnant à haute température est placé,
[Fig. 4] représente, en perspective et par observation du dessus, un exemple d'un empilement de cellules à oxydes solides de type SOEC/SOFC selon l'art antérieur avec un système d'autoserrage de l'empilement,
[Fig. 5] représente, schématiquement en coupe, un exemple de système de conditionnement conforme à l'invention d'une pluralité d'empilements de cellules à oxydes solides de type SOEC/SOFC fonctionnant à haute température, dans une position à vide sans serrage,
[Fig. 6] représente, schématiquement en coupe, l'exemple de système de conditionnement de [Fig. 5] dans une position de contact simple des cannes de serrage contre les empilements 20 sans serrage,
[Fig. 7] représente, schématiquement en coupe, l'exemple de système de conditionnement de [Fig. 5] dans une position de contact avec serrage, et
[Fig. 8] représente, schématiquement et en coupe, une variante de réalisation du système de conditionnement de [Fig. 5] selon une vue semblable à celle de [Fig. 7].

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Les figures 1 à 4 ont déjà été décrites précédemment dans la partie relative à l'état de la technique antérieure et au contexte technique de l'invention. Il est précisé que, pour les figures 1 et 2, les symboles et les flèches d'alimentation de vapeur d'eau H₂O, de distribution et de récupération de dihydrogène H₂, d'oxygène O₂, d'air et du courant électrique, sont montrés à des fins de clarté et de précision, pour illustrer le fonctionnement des dispositifs représentés.

En outre, il faut noter que tous les constituants (anode/électrolyte/cathode) d'une cellule électrochimique donnée sont préférentiellement des céramiques. La température de fonctionnement d'un empilement de type SOEC/SOFC haute température est par ailleurs typiquement comprise entre 600 et 1000°C.

De plus, les termes éventuels « supérieur » et « inférieur » sont à comprendre ici selon le sens d'orientation normal d'un empilement de type SOEC/SOFC lorsque dans sa configuration d'utilisation.

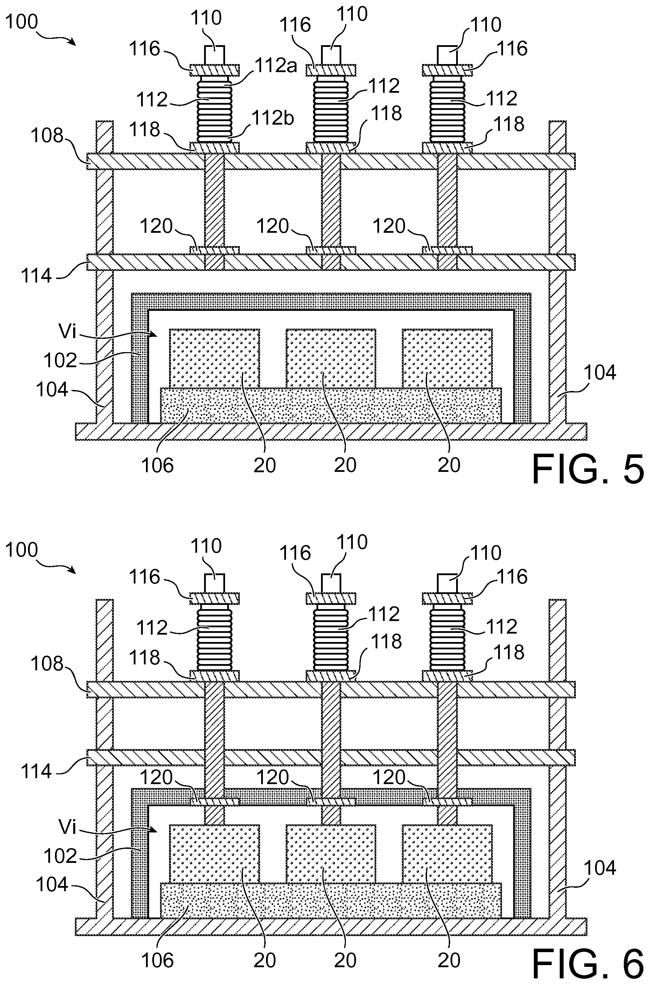

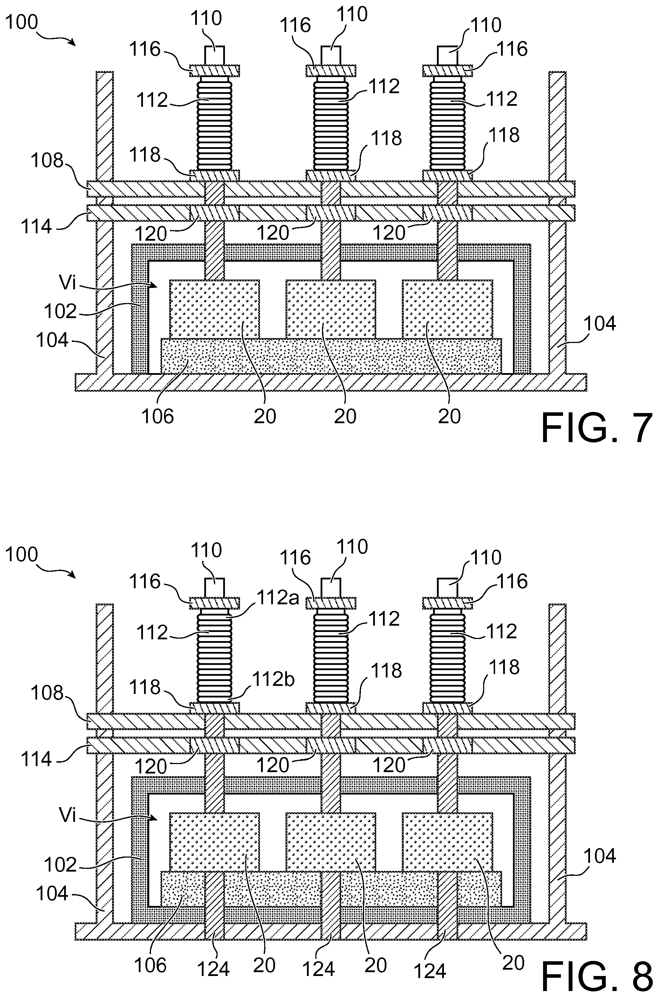

On va maintenant décrire un exemple de système de conditionnement 100 conforme à l'invention de plusieurs empilements 20 de type SOEC/SOFC en référence aux figures 5 à 7 relatives à un même mode de réalisation représenté selon différentes vues. Une variante sera décrite en référence à la figure 8.

On considère ici le conditionnement de 3 empilements 20 ou stacks. Toutefois, le nombre de stacks 20 peut être bien supérieur, notamment compris entre 2 et 100. En particulier, il peut y avoir 4 stacks 20 disposés en deux rangées de deux de sorte à avoir un bon équilibrage du premier dispositif de traverse 108, alors avantageusement sous forme de croix. Avantageusement, les stacks 20 sont disposés dans un même plan, les uns à côté des autres, et donc ne sont pas superposés les uns aux autres.

Sur la figure 5, le système de conditionnement 100 conforme à l'invention est représenté alors qu'aucun serrage, ni aucun contact, n'ont lieu au niveau des trois stacks 20.

Comme décrit précédemment dans la partie relative à l'art antérieur et au contexte technique de l'invention, chaque stack 20 comporte une pluralité de cellules électrochimiques 41 formées chacune d'une cathode, d'une anode et d'un électrolyte intercalé entre la cathode et l'anode, et une pluralité d'interconnecteurs intermédiaires 42 agencés chacun entre deux cellules électrochimiques 41 adjacentes.

Les trois stacks 20 sont placés dans le volume interne Vi d'une enceinte thermique 102 du système de conditionnement 100. De plus, un bâti 104 est positionné de part et d'autre de l'enceinte thermique 102, ce bâti 104 permettant de reprendre les efforts mécaniques.

Sur ce bâti 104 est monté un premier dispositif de traverse 108, mobile par rapport au bâti 104, étant par exemple coulissant. Ce premier dispositif de traverse 108 se trouve situé en superposition de l'enceinte thermique 102, au-dessus de celle-ci sur la figure 5.

Par ailleurs, trois cannes de serrage 110, une pour chaque stack 20, sont montées au travers du premier dispositif de traverse 108, par exemple par le biais d'orifices formés sur celui-ci. Ces trois cannes de serrage 110 permettent le serrage des trois stacks 20.

L'enceinte thermique 102 comprend des ouvertures plus grandes que les cannes de serrage 110. Un peu de laine isolante est positionnée à ces niveaux pour limiter les déperditions thermiques mais en restant souple pour ne pas gêner les déplacements.

De plus, avantageusement, trois ressorts 112 sont utilisés, un ressort 112 pour chaque stack 20. Chaque ressort 112 est monté autour de sa canne de serrage 110 correspondante. Le ressort 112 est alors fixé, par sa première extrémité 112a, à la canne de serrage 110 par le biais d'un élément de fixation 116 ainsi que, par sa deuxième extrémité 112b, au premier dispositif de traverse 108 par le biais d'un élément de guidage et de maintien 118. Autrement dit, dans cette position relevée du premier dispositif de traverse 108 visible sur la figure 5, les cannes de serrage 110 reposent sur les ressorts 112. En effet, chaque ressort 112 est fixé à la canne de serrage 110 correspondante par le biais de l'élément de fixation 116, et l'élément de guidage et de maintien 118 permet le guidage de la canne de serrage 110 et le maintien du ressort 112 contre le premier dispositif de traverse 108. Ainsi, la canne de serrage 110 est soutenue par le ressort 112, lequel est en compression en raison du poids de la canne de serrage 110.

Il faut noter que la rigidité de chaque ressort 112 est comprise entre 0,1 N/mm et 1000 N/mm, et préférentiellement entre 1 N/mm et 20 N/mm. De plus, la longueur de chaque ressort 112 est comprise entre 0,1 m et 10 m, et préférentiellement entre 1 m et 2 m.

Avantageusement, le choix du couple rigidité/longueur de chaque ressort 112 peut être fait de telle manière qu'un écrasement ou relâchement de quelques dizaines de millimètres n'entraîne un impact que de quelques pourcentages sur le serrage nominal. Un grand ressort 112 de grande longueur, par exemple de 1,5 m, et de faible raideur permet d'appliquer facilement un effort de plusieurs kN avec une bonne précision et cela même si l'objet sur lequel s'appliquent les efforts connaît des variations importantes de dimension.

A titre d'exemple, un stack 20, ou sous-stack, de 25 cellules et de 200 cm² doit être serré à 4000 N. Sa course d'écrasement pendant le conditionnement est de l'ordre de 35 mm. Ainsi, avec un ressort 112 de 1,5 m et de raideur de 6 N/mm, il suffit d'écraser le ressort 112 de 800 mm pour obtenir un serrage de 4 kN. Lors de l'écrasement du stack 20 pendant son conditionnement, la baisse de serrage sera de 210 N, soit de l'ordre de 5 % de variation de force par rapport à la consigne.

Les problèmes de dilatation de tirants ou cannes de serrage 110 peuvent aussi être résolus puisque la dilatation d'une canne métallique de coefficient de dilatation 12.10⁻⁶/°C et de 1500 mm, qui passe de 20°C à 850°C, a une dilatation de 1500 x 830 x 1,2 x 10⁻⁵ = 15 mm. Cette variation a pour effet un surchargement de 90 N.

Sur cette figure 5, on constate également que le système de conditionnement 100 comporte un deuxième dispositif de traverse 114, monté de manière fixe par rapport au bâti 104, de sorte à en améliorer la rigidité, et traversé par les cannes de serrage 110. Par ailleurs, trois éléments de guidage libre 120 sont présents, en particulier au niveau de ce deuxième dispositif de traverse 114.

Les éléments de guidage libre 120 peuvent être des pièces métalliques comportant un évidement circulaire central dont le diamètre est ajusté à celui de la canne de serrage 110. Cet évidement est ajusté afin que son diamètre soit très légèrement supérieur à celui de la canne de serrage 110. De plus, le guidage a une certaine hauteur pour bien guider.

Un tel élément est important car il est important d'appliquer la force bien au centre de l'objet. Le guidage permet de bien centrer la canne de serrage au milieu du stack à conditionner.

En outre, les trois stacks 20 sont positionnés sur une sole 106, ou encore un manifold 106, pour permettre les échanges de gaz. Aucune charge ne s'applique alors sur les stacks 20 dans cette représentation de la figure 5.

Avantageusement, l'invention permet alors d'imposer un déplacement commun à l'ensemble des ressorts 112, grâce au premier dispositif de traverse 108 appliquant le même déplacement à tous les ressorts 112. Avantageusement encore, l'utilisation d'un seul ressort 112 indépendant par stack 20, en zone froide, permet de contrôler le serrage. L'utilisation de ressorts de grande longueur et de faible rigidité peut permettre d'appliquer un serrage pratiquement constant même en cas de variation sensible de la position de l'objet à serrer.

Le déplacement du premier dispositif de traverse 108 par rapport au bâti 104 en direction de la pluralité de stacks 20 permet d'obtenir le serrage souhaité. Ce conditionnement peut être réalisé sous gaz inerte mais il est également possible d'utiliser d'autres types de gaz.

Plus spécifiquement, s'il existe un manifold pouvant distribuer des gaz à l'intérieur de chaque stack 20, alors il est possible de mettre le volume interne Vi sous air ou sous gaz inerte. En revanche, s'il n'existe pas de manifold pouvant distribuer des gaz à l'intérieur des stacks 20, il est alors nécessaire d'inerter le volume interne Vi par un gaz inerte.

Sur la figure 6, les cannes de serrage 110 sont au contact des stacks 20 mais aucun serrage n'est effectué. Pour cela, le premier dispositif de traverse 108 a été descendu jusqu'à obtenir le contact avec le premier stack 20.

Pour pouvoir serrer les stacks 20, comme représenté sur la figure 7, le premier dispositif de traverse 108 est déplacé vers le bas d'un déplacement donné pour obtenir le serrage voulu. Le serrage se fait en déplacement imposé en lien avec la rigidité des ressorts 112. Ainsi, un ressort 112 de 6 N/mm va être comprimé de 800 mm pour appliquer une force de 4000 N.

Lorsque le contact est établi, le ressort 112 s'allonge et sous l'effet de cet allongement, une force est appliquée sur le stack 20 qui est proportionnelle au déplacement du premier dispositif de traverse 108.

Ce principe de serrage conforme à l'invention présente de multiples avantages. A titres d'exemples, si un stack 20 est plus haut qu'un autre de 1 mm, alors le surserrage vu par le stack 20 sera de 6 N, ce qui est négligeable au vu des 4000 N imposés. De même, si un stack 20, lors de son conditionnement, s'écrase plus qu'un autre de 1 mm, alors il verra un déchargement de 6 N, ce qui est négligeable au vu des 4000 N imposés.

Par ailleurs, les dilatations thermiques d'une canne de serrage 110 de l'ordre de 15 mm surchargent le stack 20 de 90 N, ce qui est aussi négligeable au vu des 4000 N imposés, de même que les 35 mm d'écrasement, qui adviennent lors du conditionnement, qui créent un déchargement de l'ordre de 210 N. Aussi, les dilatations compensent en partie l'écrasement.

Pour minimiser l'impact des dilatations thermiques latérales et la problématique de centrage des cannes de serrage 110 par rapport aux stacks 20, un support ou pied 124 peut être prévu dans le volume interne Vi de l'enceinte thermique 102, comme représenté sur la variante de réalisation de la figure 8.

Le positionnement du guidage est un point important et suivant sa position le guidage peut être plus ou moins bon, notamment concernant les dilatations thermiques. L'exemple de la figure 8 est avantageux dans la mesure où le guidage est solidaire de la traverse 114 reliée au bâti 104 et au pied 124. Ainsi, lorsque le système global va chauffer, tout va se dilater ensemble et le point d'appui restera au centre de l'objet.

En particulier, dans cet exemple, chaque stack 20 est supporté par un support 124 formé au travers du manifold 106. Chaque support 124 est avantageusement lié, solidarisé, au bâti 104 qui est situé en zone froide. Ainsi, le bâti 104 mécanique complet est en zone froide, ainsi que le guidage des cannes de serrage 110.

De façon générale et applicable à tout mode de réalisation de l'invention, le positionnement du bâti 104 en zone froide est avantageux. En effet, si le bâti 104 est en zone chaude, alors la résistances des matériaux diminue drastiquement et pour reprendre les efforts, il faut alors avoir un bâti 104 avec des matériaux beaucoup plus coûteux et un dimensionnement plus robuste, par exemple une poutre qui reprend les efforts au moins deux fois plus grosse. Par ailleurs, si l'ensemble des éléments, bâti 104, traverse 114 et organe de rappel élastique, est en zone froide, alors il n'y a pas de problème de centrage des pièces vis-à-vis des dilatations, tout restant bien aligné.

Bien entendu, l'invention n'est pas limitée aux exemples de réalisation qui viennent d'être décrits. Diverses modifications peuvent y être apportées par l'homme du métier.

En particulier, il faut noter qu'il est possible de soumettre le four en totalité à un gaz inerte et de travailler sans la présence d'un manifold 106. Alors, le four comporte un moufle interne étanche et la jonction entre canne de serrage 110 et moufle est réalisée par un soufflet.

## Revendications

1. Système (100) de conditionnement d'une pluralité d'empilements (20) de cellules à oxydes solides de type SOEC/SOFC fonctionnant à haute température, chaque empilement (20) comportant une pluralité de cellules électrochimiques (41) formées chacune d'une cathode, d'une anode et d'un électrolyte intercalé entre la cathode et l'anode, et une pluralité d'interconnecteurs intermédiaires (42) agencés chacun entre deux cellules électrochimiques (41) adjacentes,
**caractérisé en ce que** le système (100) comporte :
- une enceinte thermique (102) délimitant un volume interne (Vi),
- une pluralité d'empilements (20) placés dans le volume interne (Vi),
- un bâti (104), positionné de part et d'autre de l'enceinte thermique (102),
- un premier dispositif de traverse (108), monté sur le bâti (104) de façon mobile par rapport à celui-ci, en superposition de l'enceinte thermique (102),
- une pluralité de cannes de serrage (110), chaque empilement (20) étant associé à une ou plusieurs cannes de serrage (110), les cannes de serrage (110) étant montées au travers du premier dispositif de traverse (108) et destinées à venir au contact des empilements (20) pour en permettre le serrage,
- une pluralité d'organes de rappel élastique (112), chaque empilement (20) étant associé à un ou plusieurs organes de rappel élastique (112), chaque organe de rappel élastique (112) étant monté autour d'une canne de serrage (110) et fixé, par une première extrémité (112a), à la canne de serrage (110) par le biais d'un élément de fixation (116) ainsi que, par une deuxième extrémité (112b), au premier dispositif de traverse (108) par le biais d'un élément de guidage et de maintien (118), de sorte que la canne de serrage (110) soit soutenue par l'organe de rappel élastique (112) apte à être comprimé sous l'effet du poids de la canne de serrage (110),
et **en ce que** chaque empilement (20) est associé à un nombre d'organes de rappel élastique (112) compris entre 1 et 10.

2. Système selon la revendication 1, **caractérisé en ce que** le nombre d'empilements (20) est compris entre 2 et 100.

3. Système selon la revendication 1 ou 2, **caractérisé en ce qu'**il comporte une sole (106), placée dans le volume interne (Vi) de l'enceinte thermique (102) et sur laquelle est placée la pluralité d'empilements (20).

4. Système selon l'une des revendications précédentes, **caractérisé en ce que** chaque empilement (20) est associé à un seul et unique organe de rappel élastique (112) et une seule et unique canne de serrage (110).

5. Système selon l'une quelconque des revendications précédentes, **caractérisé en ce que** la rigidité de chaque organe de rappel élastique (112) est comprise entre 0,1 N/mm et 1000 N/mm, notamment entre 1 N/mm et 20 N/mm.

6. Système selon l'une quelconque des revendications précédentes, **caractérisé en ce que** la longueur de chaque organe de rappel élastique (112) est comprise entre 0,1 m et 10 m, notamment entre 1 m et 2 m.

7. Système selon l'une quelconque des revendications précédentes, **caractérisé en ce qu'**il comporte au moins un support (124) des empilements (20), notamment un support (124) par empilement (20), solidarisé au bâti (104), notamment formé au travers d'une sole (106) sur laquelle est placée la pluralité d'empilements (20).

8. Procédé de serrage d'une pluralité d'empilements (20) de cellules à oxydes solides de type SOEC/SOFC fonctionnant à haute température par le biais d'un système (100) de conditionnement selon l'une quelconque des revendications précédentes, **caractérisé en ce qu'**il comporte l'étape consistant à déplacer le premier dispositif de traverse (108) par rapport au bâti (104) en direction de la pluralité d'empilements (20).

9. Procédé selon la revendication 8, **caractérisé en ce qu'**il est mis en œuvre sous gaz inerte.

## Patentansprüche

1. Konditionierungssystem (100) für eine Vielzahl von Stapeln (20) von hochtemperaturbetriebenen Festoxidzellen vom Typ SOEC/SOFC, wobei jeder Stapel (20) eine Vielzahl von elektrochemischen Zellen (41), die jeweils aus einer Kathode, einer Anode und einem zwischen Kathode und Anode eingefügten Elektrolyten gebildet sind, und eine Vielzahl von Zwischenverbindern (42) umfasst, die jeweils zwischen zwei benachbarten elektrochemischen Zellen (41) angeordnet sind,
**dadurch gekennzeichnet, dass** das System (100) umfasst:
- eine Wärmekammer (102), die ein Innenvolumen (Vi) begrenzt,
- eine Vielzahl von Stapeln (20), die in dem Innenvolumen (Vi) platziert sind,
- ein Gestell (104), das auf beiden Seiten der Wärmekammer (102) positioniert ist,
- eine erste Querträgervorrichtung (108), die an dem Gestell (104) beweglich in Bezug auf dieses montiert ist und die Wärmekammer (102) überlagert,
- eine Vielzahl von Spannstangen (110), wobei jeder Stapel (20) mit einer oder mehreren Spannstangen (110) verbunden ist, wobei die Spannstangen (110) durch die erste Querträgervorrichtung (108) montiert sind und dazu bestimmt sind, mit den Stapeln (20) in Kontakt zu kommen, um das Spannen zu ermöglichen,
- eine Vielzahl von elastischen Rückstellorganen (112), wobei jeder Stapel (20) mit einem oder mehreren elastischen Rückstellorganen (112) verbunden ist, wobei jedes elastische Rückstellorgan (112) um eine Spannstange (110) montiert und von einem ersten Ende (112a) mittels eines Befestigungselements (116) an der Spannstange (110) sowie von einem zweiten Ende (112b) mittels eines Führungs- und Halteelements (118) an der ersten Querträgervorrichtung (108) befestigt ist, derart, dass die Spannstange (110) durch das elastische Rückstellorgan (112) gestützt wird, das unter der Wirkung des Gewichts der Spannstange (110) komprimiert werden kann,
und dass jeder Stapel (20) mit einer Anzahl von elastischen Rückstellorganen (112) zwischen 1 und 10 verbunden ist.

2. System nach Anspruch 1, **dadurch gekennzeichnet, dass** die Anzahl der Stapel (20) zwischen 2 und 100 liegt.

3. System nach Anspruch 1 oder 2, **dadurch gekennzeichnet, dass** es eine Basis (106) umfasst, die in dem Innenvolumen (Vi) der Wärmekammer (102) platziert ist und auf dem die Vielzahl von Stapeln (20) platziert ist.

4. System nach einem der vorhergehenden Ansprüche, **dadurch gekennzeichnet, dass** jeder Stapel (20) mit einem einzigen elastischen Rückstellorgan (112) und einer einzigen Spannstange (110) verbunden ist.

5. System nach einem der vorhergehenden Ansprüche, **dadurch gekennzeichnet, dass** die Steifigkeit jedes elastischen Rückstellorgans (112) zwischen 0,1 N/mm und 1000 N/mm, insbesondere zwischen 1 N/mm und 20 N/mm, liegt.

6. System nach einem der vorhergehenden Ansprüche, **dadurch gekennzeichnet, dass** die Länge jedes elastischen Rückstellorgans (112) zwischen 0,1 m und 10 m, insbesondere zwischen 1 m und 2 m, liegt.

7. System nach einem der vorhergehenden Ansprüche, **dadurch gekennzeichnet, dass** es mindestens einen Träger (124) der Stapel (20), insbesondere einen Träger (124) pro Stapel (20), umfasst, der mit dem Gestell (104) fest verbunden ist und insbesondere durch eine Basis (106) gebildet ist, auf der die Vielzahl von Stapeln (20) platziert sind.

8. Spannverfahren für eine Vielzahl von Stapeln (20) von hochtemperaturbetriebenen Festoxidzellen vom Typ SOEC/SOFC mittels eines Konditionierungssystems (100) nach einem der vorhergehenden Ansprüche, **dadurch gekennzeichnet, dass** es den Schritt umfasst, der darin besteht, die erste Querträgervorrichtung (108) in Bezug auf das Gestell (104) in Richtung der Vielzahl von Stapeln (20) zu bewegen.

9. Verfahren nach Anspruch 8, **dadurch gekennzeichnet, dass** es unter Inertgas durchgeführt wird.

## Claims

1. A system (100) for conditioning a plurality of stacks (of solid oxide cells of the SOEC/SOFC type operating at high temperature, each stack (20) including a plurality of electrochemical cells (41) each formed of a cathode, an anode and an electrolyte interposed between the cathode and the anode, and a plurality of intermediate interconnectors (42) each arranged between two adjacent electrochemical cells (41), **characterised in that** the system (100) includes:
- a thermal enclosure (102) delimiting an internal volume (Vi),
- a plurality of stacks (20) placed in the internal volume (Vi),
- a frame (104), positioned on either side of the thermal enclosure (102),
- a first crosspiece device (108), mounted on the frame (104) in a movable manner relative thereto, superimposed on the thermal enclosure (102),
- a plurality of clamping rods (110), each stack (20) being associated with one or more clamping rods (110), the clamping rods (110) being mounted through the first crosspiece device (108) and intended to contact the stacks (20) to allow them to be clamped,
- a plurality of elastic return members (112), each stack (20) being associated with one or more elastic return members (112), each elastic return member (112) being mounted around a clamping rod (110) and fixed, by a first end (112a), to the clamping rod (110) by means of a fixing element (116) as well as, by a second end (112b), to the first crosspiece device (108) by means of a guiding and holding element (118), so that the clamping rod (110) is supported by the elastic return member (112) capable of being compressed under the effect of the weight of the clamping rod (110),
and **in that** each stack (20) is associated with a number of elastic return members (112) comprised between 1 and 10.

2. The system according to claim 1, **characterised in that** the number of stacks (20) is comprised between 2 and 100.

3. The system according to claim 1 or 2, **characterised in that** it includes a base (106), placed in the internal volume (Vi) of the thermal enclosure (102) and on which the plurality of stacks (20) is placed.

4. The system according to one of the preceding claims, **characterised in that** each stack (20) is associated with a single and unique elastic return member (112) and a single and unique clamping rod (110).

5. The system according to any one of the preceding claims, **characterised in that** the rigidity of each elastic return member (112) is comprised between 0.1 N/mm and 1000 N/mm, in particular between 1 N/mm and 20 N/mm.

6. The system according to any one of the preceding claims, **characterised in that** the length of each elastic return member (112) is comprised between 0.1 m and 10 m, in particular between 1 m and 2 m.

7. The system according to any one of the preceding claims, **characterised in that** it includes at least one support (124) for the stacks (20), in particular one support (124) per stack (20), secured to the frame (104), in particular formed through a base (106) on which the plurality of stacks (20) is placed.

8. A method for clamping a plurality of stacks (20) of solid oxide cells of the SOEC/SOFC type operating at high temperature by means of a conditioning system (100) according to any one of the preceding claims, **characterised in that** it includes the step consisting of moving the first crosspiece device (108) relative to the frame (104) in the direction of the plurality of stacks (20).

9. The method according to claim 8, **characterised in that** it is implemented under inert gas.
